Europäisches Patentamt

European Patent Office

Office européen des brevets

(11) Publication number: **0 083 462**
**B1**

## EUROPEAN PATENT SPECIFICATION

(45) Date of publication of patent specification: **27.08.86**

(21) Application number: **82201661.4**

(22) Date of filing: **24.12.82**

(51) Int. Cl.⁴: **F 02 C 1/00,** F 27 D 17/00,
C 10 G 11/18

(54) Process for the recovery of power from hot gases and an apparatus therefor.

(30) Priority: **06.01.82 GB 8200256**

(43) Date of publication of application:
**13.07.83 Bulletin 83/28**

(45) Publication of the grant of the patent:
**27.08.86 Bulletin 86/35**

(84) Designated Contracting States:
**CH DE FR LI**

(56) References cited:
**GB-A-1 043 112**
**GB-A-2 066 365**
**US-A-3 702 308**
**US-A-3 777 486**

**HYDROCARBON PROCESSING, vol. 57, no. 12,
December 1978, pages 131-135, Houston, USA
T.A. DZIEWULKI et al.: "Recover power from
FCCuni ts"**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **McKillop, John Gordon
Carel van Bylandtlaan 30
NL-2596 HR The Hague (NL)**

(74) Representative: **Aalbers, Onno et al
P.O. Box 302
NL-2501 CH The Hague (NL)**

## Description

The invention relates to a process for the recovery of power from hot gases by introducing them into a hot gas expander turbine provided with a by-pass for said hot gases. It also relates to an apparatus to be used in such a process.

From GB—A—2,066,365 a turbocharger (i.e. a hot-gas expander turbine) for an internal combustion engine is known, said turbocharger comprising a turbine housing made as a single block and provided with an exhaust by-pass passage allowing engine exhaust gases to by-pass a turbine wheel and thus preventing overspeeding of the turbocharger. Such an exhaust by-pass passage is purposely in frequent use during normal engine operation. As it is highly unlikely that (liquid) water will be present in the by-pass passage, corrosion problems are not expected.

From US—A—3,702,308 a process is known for the utilization of the energy content of the flue gas accrued in plants used for the catalytic cracking of hydrocarbons by supplying hot flue gas originating from a regenerator to a hot-gas expander turbine via a cyclone or catalyst-separating device which can operate independently of the regenerator. In the event of trouble with the supply of electricity in the plant, or in the event of defects in the hot-gas expander turbine, the flue gas can by-pass the hot-gas expander turbine via a by-pass line. For that purpose there are present a valve at the inlet of the by-pass line and a valve at the inlet of the hot-gas expander turbine which are connected in such a manner that closing of one valve causes immediate opening of the other valve, and vice versa. Accordingly, a zero per cent by-pass is followed by a 100% by-pass in case of decoupling of the hot-gas expander turbine from the catalytic cracking process.

In case power recovery processes are carried out at zero by-pass conditions during normal operation problems arise which have neither been appreciated in GB—A—2,066,365 nor in US—A—3,702,308 but which problems appear to be of great importance in actual practice. One problem lies in the high pressure drops, high temperatures and high rates of temperature rise the by-pass-inlet valve and the by-pass-line are subjected to when put into operation suddenly and, to a lesser extent, when put out of action again. The by-pass line easily cools down to a temperature of below 200°C when taken out of action temporarily and will suffer low-temperature stress corrosion cracking. Consequently, the life of these parts of the power recovery system is greatly dependent on the change of operating conditions imposed on them.

In today's fluid catalytic cracking plants power recovery systems are applied in which regenerator-flue gas having a temperature of 500—750°C is expanded so that by-pass lines around hot-gas expander turbines are subjected to increases in temperature from about 50°C at zero per cent by-pass to about 700°C at 100% by-pass.

Another factor which decreases the lifetime of the by-pass line and valve is the corrosion activity which occurs when liquid water is present therein. Corrosive salts such as chlorides which are dissolved in the water may corrode the metal of the valve and by-pass line and this may lead to a cracking of the metal which will result in a complete destruction of the metal parts in a relatively short time. Moreover, by-pass valves will start to leak. This will cause a reduction in power recovery because (an increasing part of the) hot gas will be flowing through the by-pass line instead of flowing through the hot-gas expander turbine to allow recovery of power.

It is therefore an object of the present invention to provide a solution for the above-mentioned problems and to improve the overall effectiveness of a hot-gas power recovery process and its adaptability to various operating conditions.

Accordingly, the present invention relates to a process for the recovery of power from hot gases by introducing them into a hot-gas expander turbine provided with a by-pass for said hot gases wherein at least part of the by-pass is surrounded by said hot gases and/or turbine exhaust gases at least at zero by-pass during normal operation.

The present invention relates in particular to a process for the recovery of power from hot gases emanated from a catalytic cracking process. The hot gases usually have a temperature in the range of from 500—750°C. The pressure of the hot gases is preferably in the range of 1.5—4.0 bar abs.

In the process according to the present invention no extra (external) energy is necessary for heating the by-pass which improves the economics of the process. As the temperature of the exhaust gases from the hot-gas expander turbine is normally not more than about 200°C lower than the temperature of the hot gases entering the hot-gas expander and thus in catalytic cracking operations in the range of from about 300—600°C, the by-pass is preferably kept within this temperature range by the heat of the exhaust gases.

Although there are many possible constructional ways and means for heating the by-pass with heat derived from (the) hot gases there is a number of preferred options. In particular, at least part of the by-pass line is located inside the exhaust duct of the hot-gas expander turbine. Another preferred option is the location of at least part of the by-pass line inside the inlet duct of the hot-gas expander turbine.

Still another preferred option is the location of the by-pass line partly inside the exhaust duct and partly inside the inlet duct of the hot-gas expander turbine.

In order to let down the pressure in the by-pass line to the lower level required by downstream equipment i.e. from a pressure with which the hot gases enter the by-pass line to a pressure with which the exhaust gases enter the exhaust duct of the hot-gas expander turbine, the by-pass preferably comprises an orifice chamber which may be located in the inlet part and/or outlet part of the by-pass line. The orifice chamber not only serves the function of pressure let down, but also that of noise suppression.

Although the present invention may be used in any process which produces hot gases from which power can be recovered in a power recovery unit and which process also contains a by-pass around the power recovery unit, the present process is preferably applied in a fluid catalytic cracking process which produces hot gases in an oxidative catalyst regenerator containing one or more cyclones or separating stages for separating catalyst particles from hot gases which gases, having normally a temperature in the range of from 600—700°C, are further cleaned of catalyst particles in a next stage separator before entering a hot-gas expander turbine for the recovery of power.

The present process may be operated in such a way that less than 100% by-pass is used when a minor upset causes the rotating machinery of the power recovery unit — such as motor/generators and air blowers — to speed past some set speed; a hot gas by-pass of a few per cent will then be sufficient to cope with the upset whereas the by-pass should be so regulated that the by-pass flow is increased in case of upsets of a more severe order. Also under these circumstances the advantages of the present process are evident.

The present invention further relates to an apparatus for the recovery of power from hot gases comprising a hot-gas expander turbine having an inlet duct for hot gases, an exhaust duct for exhaust gases and a by-pass, wherein at least part of the by-pass is located inside the exhaust — and/or the inlet duct. Suitably the exhaust gases are led from the hot-gas expander turbine to additional heat recovery and/or stack facilities.

In a preferred embodiment of the apparatus according to the invention the by-pass comprises an orifice chamber which is most preferably located inside the exhaust — or the inlet duct of the hot-gas expander turbine.

Another preferred embodiment is the location of part of the by-pass inside the exhaust duct and another part inside the inlet duct of the hot-gas expander turbine.

The present invention will now be further described with reference to the accompanying drawings and the Example.

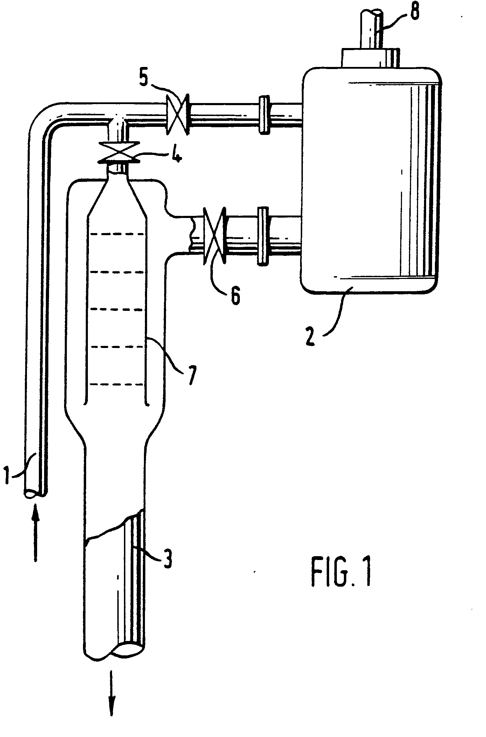

Fig. 1 represents one embodiment of the invention. 1 Is an inlet duct through which hot gas is led to the hot-gas expander turbine 2 which gas after having been expanded flows through the exhaust duct 3.

A by-pass line substantially consisting of an orifice chamber 7 is located inside the exhaust duct 3. A by-pass valve 4 is located between the inlet duct 1 and the exhaust duct 3. When the apparatus is on stream with zero by-pass the by-pass valve 4 is kept at operating temperature not only by the hot gases flowing through the inlet duct 1, but also by the exhaust gases flowing through the exhaust duct 3. The orifice chamber 7 is kept at elevated temperature by the exhaust gases glowing through the exhaust duct 3 and thus surrounding the orifice chamber. Valves 5 and 6 may be used to decouple the hot-gas expander turbine from the process which produces the hot gases by closing them completely while opening by-pass valve 4. 8 Represents a turbine shaft.

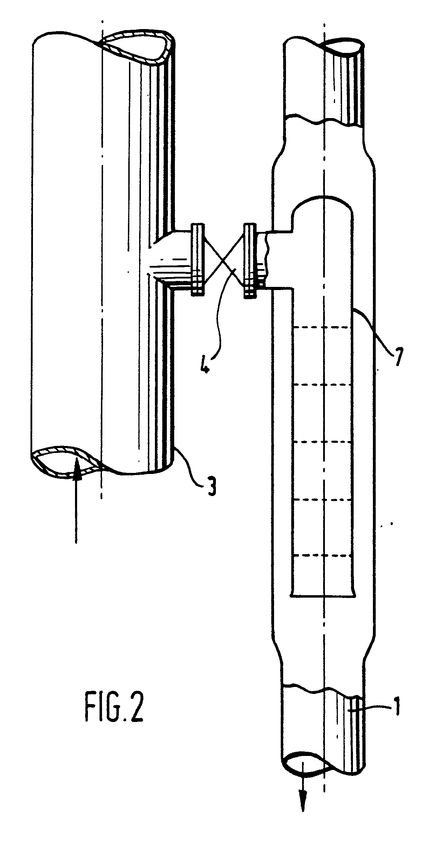

Fig. 2 represents another embodiment of the invention showing an exhaust duct 3 of a hot-gas expander turbine, which is not shown, through which exhaust gases from the hot-gas expander turbine flow and an inlet duct 1 through which hot gases flow to the hot-gas expander turbine. Inside the inlet duct a by-pass line substantially consisting of an orifice chamber 7 is located. Between the exhaust duct 3 and the inlet duct 1 there is a valve 4 at the outlet side of the orifice chamber 7.

Example

In a fluid catalytic cracking unit a regenerator-flue gas with a temperature of 659°C and a pressure of 3.16 bar abs. is routed via a third stage separator to a hot-gas expander turbine. The clean flue gas with a temperature of 654°C and a pressure of 2.93 bar abs. passes out of the third stage separator through an inlet duct 1 and a valve 5 into a hot-gas expander turbine 2. The exhaust gases from the hot-gas expander turbine 2 having a temperature of 491°C and at atmospheric pressure (0.97 bar abs.) flow through an exhaust duct 3 inside of which an orifice chamber 7 is located as major part of a by-pass line. The shaft 8 of the expander turbine is connected to an air-blower from which air is supplied to the regenerator which in turn is connected to an induction motor/generator. The motor is activated to commence the start-up. During start-up, the expander absorbs energy. As the start-up temperature and the flue gas flow increase, the expander turbine develops power and the electric motor draws less current. As the expander meets and exceeds blower horsepower demands, the train of hot-gas expander turbine, motor/generator and air blower increases in speed slightly and the electric motor performs as a generator and produces power which can be fed back into the refinery grid.

**Claims**

1. Process for the recovery of power from hot gases by introducing them into a hot-gas expander turbine provided with a by-pass for said hot gases, characterized in that at least part of the by-pass is surrounded by said hot gases and/or turbine exhaust gases at least at zero by-pass during normal operation.

2. Process as claimed in claim 1, characterized in that hot gases are used emanating from a catalytic cracking process.

3. Apparatus for the recovery of power from hot gases according to a process as claimed in claim 1 or 2, comprising a hot-gas expander turbine having an inlet duct for hot gases, an exhaust duct for exhaust gases and a by-pass, characterized in that at least part of the by-pass is located inside the exhaust — and/or the inlet duct.

4. Apparatus according to claim 3, characterized in that the by-pass comprises an orifice chamber.

## Patentansprüche

1. Verfahren für die Wiedergewinnung von Energie von heißen Gasen durch Einführen der Gase in ein Heißgas-Entspannungsturbine, die mit einer Umgehung für die Heißen Gase versehen ist, dadurch gekennzeichnet, daß wenigstens ein Teil der Umgehung von den heißen Gasen und/oder den Turbinenaustrittsgasen wenigstens bei geschlossener Umgehung während des normalen Arbeitens umgeben ist.

2. Verfahren nach Anspruch 1, dadruch gekennzeichnet, daß heiße Gase verwendet werden, die aus einem katalytischen Krackverfahren ausströmen.

3. Vorrichtung zum Wiedergewinnen von Energie von heißen Gasen Gemäß einem Verfahren nach Anspruch 1 oder 2, mit einer Heißgas-Entspannungsturbine, die einen Eintrittskanal für heiße Gase, einen Austrittskanal für Austrittsgase und eine Umgehung aufweist, dadurch gekennzeichnet, daß wenigstens ein Teil der Umgehung innerhalb des Auslaßkanals und/oder des Einlaßkanals angeordnet ist.

4. Vorrichtung nach Anspruch 3, dadurch gekennzeichnet, daß die Umgehung eine mit Öffnungen versehene Kammer aufweist.

## Revendications

1. Procédé pour la récupération d'énergie contenue dans des gaz chauds en les introuduisant dans une turbine à détendeur de gaz chauds équipée d'une dérivation pour lesdits gaz chauds, caractérisé en ce qu'au moins une partie de la dérivation est entourée par lesdits gaz chauds et/ou les gaz d'échappement de turbine au moins pour une dérivation nulle en marche normale.

2. Procédé tel que revendiqué dans la revendication 1, caractérisé en ce que les gaz chauds utilisés proviennent d'un processus de craquage catalytique.

3. Dispositif pour la récupération d'énergie contenue dans des gaz chauds en application d'un procédé tel que revendiqué dans la revendication 1 ou 2, comprenant une turbine à détendeur de gaz chauds comportant un conduit d'entrée de gaz chauds, un conduit de sortie de gaz d'échappement et une dérivation, caractérisé en ce qu'au moins une partie de la dérivation est placée à l'intérieur du conduit d'échappement et/ou du conduit d'entrée.

4. Dispositif selon la revendication 3, caractérisé en ce que la dérivation comprend une chambre orifice.

FIG. 1

FIG.2